# EUROPEAN PATENT APPLICATION

(11) **EP 2 138 341 A1**
(43) Date of publication of application: **30.12.2009**
(21) Application number: 08425449.9
(22) Date of filing: 25.06.2008
(51) Int. Cl.: B60K 6/48, B60K 6/445

(54) **Automotive transmission provided with an electric motor**

(71) Applicant: Magneti Marelli Powertrain S.p.A., 28011 Corbetta (IT)
(72) Inventor: Medico, Giuseppe, 10098 Rivoli (IT); Raimondi, Marco, 41010 Piumazzo (IT); Amisano, Fabrizio, 10144 Torino (IT)
(74) Representative: Maccagnan, Matteo

(57) **Abstract**

An automotive transmission (1) displaying: a mechanical gearbox (4), which is provided with a primary shaft (5) connectable to a drive shaft (3) of an internal combustion engine (2), with a secondary shaft (7) connected to drive wheels, and with a plurality of gear pairs, each of which includes a primary gear (11) mounted to the primary shaft (5) and a secondary gear (12) which is mounted to the secondary shaft (7) and permanently meshes with the primary shaft (11); a clutch (6) for connecting the primary shaft (5) of the servo-assisted gearbox (4) to a drive shaft (3) of the internal combustion engine (2); and an electric machine (15) provided with a shaft (18) thereof, which is mechanically connected to a first primary gear (11a) which is arranged at one end of the primary shaft (5) and permanently meshes with a corresponding first secondary gear (12a).

## Description

### TECHNICAL FIELD

The present invention relates to an automotive transmission provided with an electric motor.

### BACKGROUND ART

A hybrid vehicle includes an internal combustion engine, which transmits the drive torque to the drive wheels by means of a transmission provided with a gearbox, and at least one electric machine electrically connected to an electric accumulation system and mechanically connected to the drive wheels.

While travelling, the following situations are possible: a thermal operating mode, in which the drive torque is generated only by the combustion engine and the electric machine possibly works as a generator for recharging the electric accumulation system; an electric operating mode, in which the internal combustion engine is off and the drive torque is generated only by the electric machine working as a motor; or a combined operating mode, in which the drive torque is generated both by the combustion engine and by the electric machine working as a motor. Furthermore, to increase the overall energy efficiency during all steps of decelerating, the electric machine may be used as a generator for a regenerative deceleration in which the kinetic energy owned by the vehicle, instead of being fully dissipated in different frictions, is partially converted into electric energy which is stored in the electric accumulation system.

The arrangement of the electric motor inside the vehicle and, consequently, the mechanical connection of the electric motor to the drive wheels may be very complex in an existing vehicle, because in an existing vehicle which has not specifically designed for hybrid traction, it is generally very difficult to find the required space for accommodating the electric motor. Therefore, it is often impossible to modify an existing vehicle to make the vehicle itself hybrid; such a limitation is particularly serious, because it does not allow to produce a hybrid vehicle starting from an existing vehicle of the conventional type, but requires a completely new design of the hybrid vehicle. Consequently, the design and development costs of a hybrid vehicle are very high, making the commercialization of hybrid vehicles economically not very convenient.

### DISCLOSURE OF INVENTION

It is the object of the present invention to make an automotive transmission provided with an electric motor, which transmission is free from the above-described drawbacks and which is easy and cost-effective to be made.

According to the present invention, an automotive transmission provided with an electric motor is made as recited in the accompanying claims.

### BRIEF DESCRIPTION OF THE DRAWINGS

The present invention will now be described with reference to the accompanying drawings, which show some non-limitative embodiments thereof, in which:
- figure 1 is a diagrammatic view of an automotive transmission provided with an electric motor and made according to the present invention;
- figure 2 is a diagrammatic side section view, with parts removed for clarity, in a meshing position of a connecting device which connects the electric machine to a gearbox of the transmission in figure 1;
- figure 3 is a diagrammatic side section view, with parts removed for clarity, of the connecting device in figure 2 in an idle position;
- figure 4 is a diagrammatic front view, with parts removed for clarity, of an epicyclic gear train of the connecting device in figure 2;
- figure 5 is a diagrammatic side section view, with parts removed for clarity, of a variant of the connecting device in figure 2 in an idle position;
- figure 6 is a diagrammatic side section view, with parts removed for clarity, of the connecting device in figure 5 in a first meshing position;
- figure 7 is a diagrammatic side section view, with parts removed for clarity, of the connecting device in figure 5 in a second meshing position;
- figure 8 is a diagrammatic front view, with parts removed for clarity, of an epicyclic gear train of the connecting device in figure 5;
- figure 9 is a diagrammatic side section view, with parts removed for clarity, of a further variant of the connecting device in figure 2;
- figure 10 is a diagrammatic view of a different embodiment of an automotive transmission provided with an electric motor and made according to the present invention; and
- figure 11 is a diagrammatic view of a variant of the transmission in figure 10.

### PREFERRED EMBODIMENT OF THE INVENTION

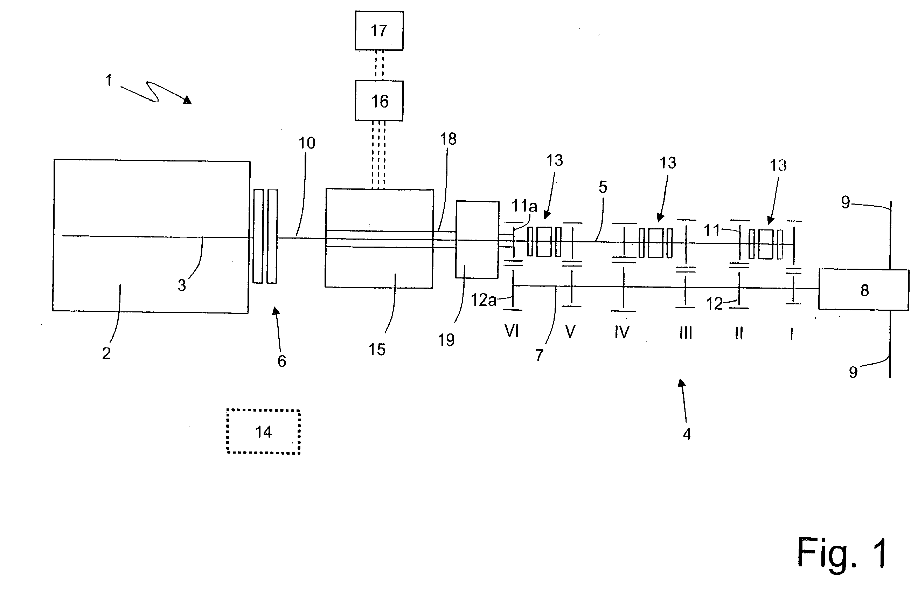

In figure 1, numeral 1 indicates as a whole a servo-assisted transmission for a car propelled by an internal combustion engine 2, which is provided with a drive shaft 3 which rotates at an angular speed ωₘ.

The servo-assisted transmission 1 includes a servo-assisted gearbox 4, which is provided with a primary shaft 5 with rotates at an angular speed ω₁ and is connectable to the drive shaft 3 by means of a servo-assisted clutch 6, and with a secondary shaft 7 which rotates at an angular speed ω₂ and is connected to a differential 8 which transmits the motion to the drive wheels by means of two axle shafts 9. An input of the servo-assisted clutch 6 is directly connected to the drive shaft 3, while an output of the servo-assisted clutch 6 is connected to the primary shaft 6 of the servo-assisted gearbox 4 by means of a transmission shaft 10.

The servo-assisted gearbox 4 shown in figure 1 includes six forward speeds indicated by Roman numerals (first speed I, second speed II, third speed III, fourth speed IV, fifth speed V and sixth speed VI). The primary shaft 5 and the secondary shaft 7 are mechanically coupled to each other by means of a plurality of gear pairs, each of which defines a corresponding speed and includes a primary gear 11 mounted to the primary shaft 5 and a secondary gear 12 mounted to the secondary shaft 7.

Each primary gear 11 is idly mounted to the primary shaft 5 and always meshes with the corresponding secondary gear 12; instead, each secondary gear 12 is keyed onto the secondary shaft 7 so as to integrally rotate with the secondary shaft 7 itself. Furthermore, the servo-assisted gearbox 4 includes three synchronizers 13, each of which is coaxially mounted to the primary shaft 5, is arranged between two primary gears 11, and is adapted to be actuated to alternatively engage the two primary gears 11 with the primary shaft 5 (i.e. to alternatively make the two primary gears 11 angularly integral with the primary shaft 5). In other words, each synchronizer 13 may be displaced either in one sense to engage a primary gear 11 with the primary shaft 5, or in the other sense to engage the other primary gear 11 with the primary shaft 5.

According to a different embodiment (not shown and perfectly equivalent to the above-described embodiment), the primary gears 11 are keyed onto the primary shaft 5, the secondary gears 12 are idly mounted to the secondary shaft 7, and the synchronizers 13 are mounted to the secondary shaft 7 for engaging the secondary gears 12 with the secondary shaft 7 itself.

The servo-assisted gearbox 4 is actuated by a hydraulic servo-control to drive the synchronizers 12 so as to engage and disengage the speeds; the servo-assisted clutch 6 is also actuated by a hydraulic servo-control to connect and disconnect the drive shaft 3 to and from the primary shaft 5. The servo-assisted transmission 1 includes an electronic control unit 14 (diagrammatically shown), which drives the hydraulic servo-controls of both the servo-assisted gearbox 4 and the servo-assisted clutch 6.

Furthermore, the servo-assisted transmission 1 includes a reversible electric machine 15 (i.e. which may operate both as a motor by absorbing electric energy and generating mechanical work, and as a generator by absorbing mechanical work and generating electric energy) driven by an electric actuator 16 connected to at least one battery 17 adapted to store electric energy.

The reversible electric machine 15 includes a shaft 18, which is integral with a rotor of the electric machine 15, and is mechanically connectable to a primary gear 11a of the servo-assisted gearbox 4 which is arranged at one end of the primary shaft 5 and permanently meshes with a corresponding secondary gear 12a. A connecting device 19, which is adapted to mechanically connect and disconnect the shaft 18 of the electric machine 15 to and from the primary gear 11a, is interposed between the shaft 18 of the electric machine 15 and the primary gear 11a of the servo-assisted gearbox 4.

According to the embodiment shown in figure 1, the electric machine 15 and the connecting device 19 are arranged reciprocally in series, are coaxially arranged about the propeller shaft 10, and are centrally hollow to accommodate the transmission shaft 10 therein.

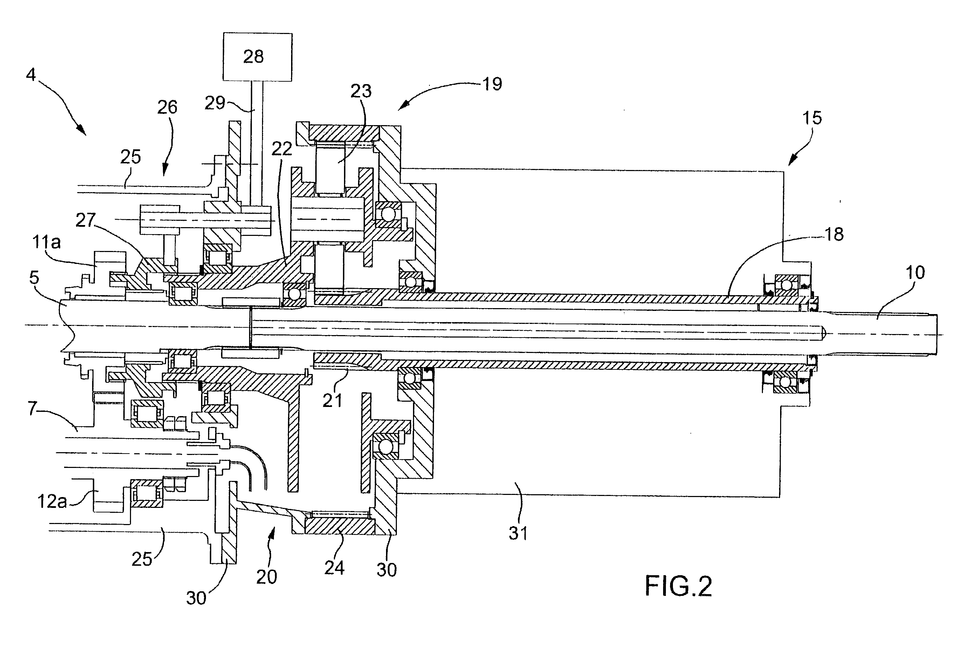

As shown in figure 2, the connecting device 19 in figure 1 includes an epicyclic gear train 20 provided with a sun gear 21 integral with the shaft 18 of the electric machine 15, with a planet gear carrier 22 which is coaxial and facing the primary gear 11a and transmits motion to the primary gear 11a itself, with a number of planet gears 23 which mesh with the sun gear 21 and are carried by the planet gear carrier 22, and an external ring gear 24 which meshes with the planet gears 23 and is fixed (i.e. integral with a fixed frame 25 of the servo-assisted gearbox 4).

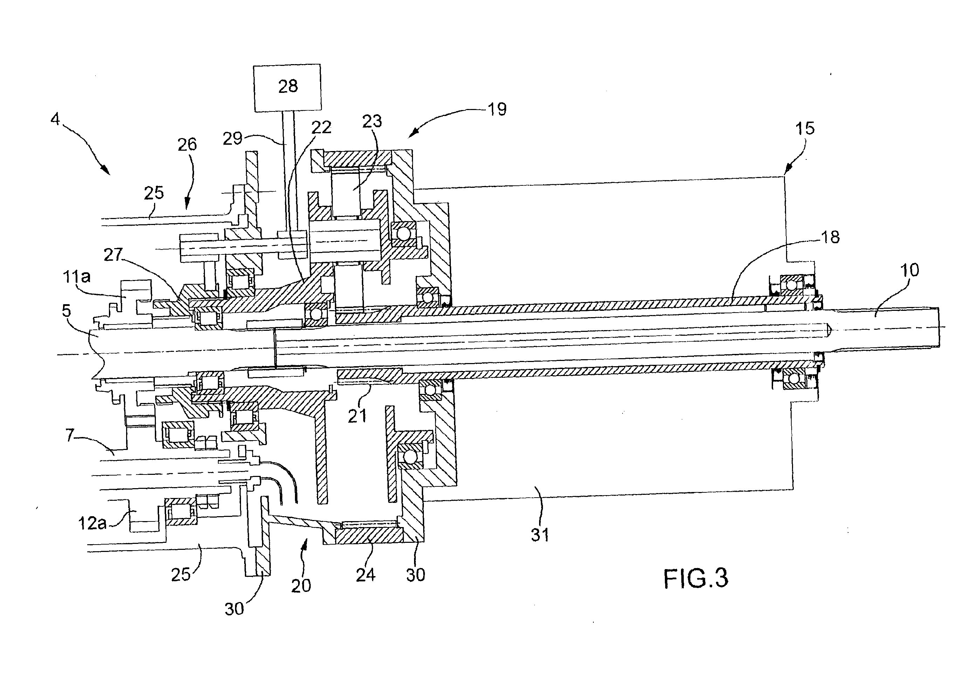

Furthermore, the connecting device 19 includes a coupling member 26, which is interposed between the planet gear carrier 23 and the primary gear 11a and which may be actuated to mechanically engage the planet gear carrier 23 of the primary gear 11a. The coupling member 26 includes a coupling gear 27 which is angularly integral with the planet gear carrier 23 and is axially movable between a disengaging position (shown in figure 3), in which the coupling gear 27 is separated from the primary gear 11a, and an engaging position (shown in figure 2), in which the coupling gear 27 is frontally engaged with the primary gear 11a. The position of the coupling gear 27 is controlled by a hydraulic actuator device 28, which is mechanically connected to the coupling gear 27 by means of a mechanical transmission 29.

It is worth noting that before displacing the coupling gear 27 from the disengaging position (shown in figure 3) to the engaging position (shown in figure 2), the electric machine 15 is run as a motor by absorbing electric energy from the battery 17 to make the coupling gear 27 reach a rotation speed nearly equal to the rotation speed of the primary gear 11a; in this manner, the engagement of the coupling gear 27 with the primary gear 11a is fast, silent and free from relevant mechanical stresses.

According to a preferred embodiment, a fixed tubular frame 30 of the connecting device 19 is overhangingly fixed to the fixed frame 25 of the servo-assisted gearbox 4 by means of a plurality of screws (not shown); furthermore, a fixed tubular frame 31 of the electric machine 15 is overhangingly fixed to the fixed frame 30 of the connecting device 19 by means of a plurality of screws (not shown).

According to a different embodiment (not shown), the coupling member 26 is not present and thus the planet gear carrier 23 is permanently connected to the primary gear 11a; furthermore, the ring gear 24 of the epicyclic gear train 20 is rotationally mounted and coupled with a brake which may be actuated to block the rotation of the external ring gear 24. In this embodiment, the function of the coupling member 26 is replaced by the brake coupled to the external ring gear 24: when the brake blocks the rotation of the external ring gear 24, the epicyclic gear train 20 then transmits some torque from the shaft 18 of the electric machine 15 to the primary gear 11a, while when the brake allows the rotation of the external ring gear 24, the epicyclic gear train 20 then does not transmit any torque from the shaft 18 of the electric machine 15 to the primary gear 11a.

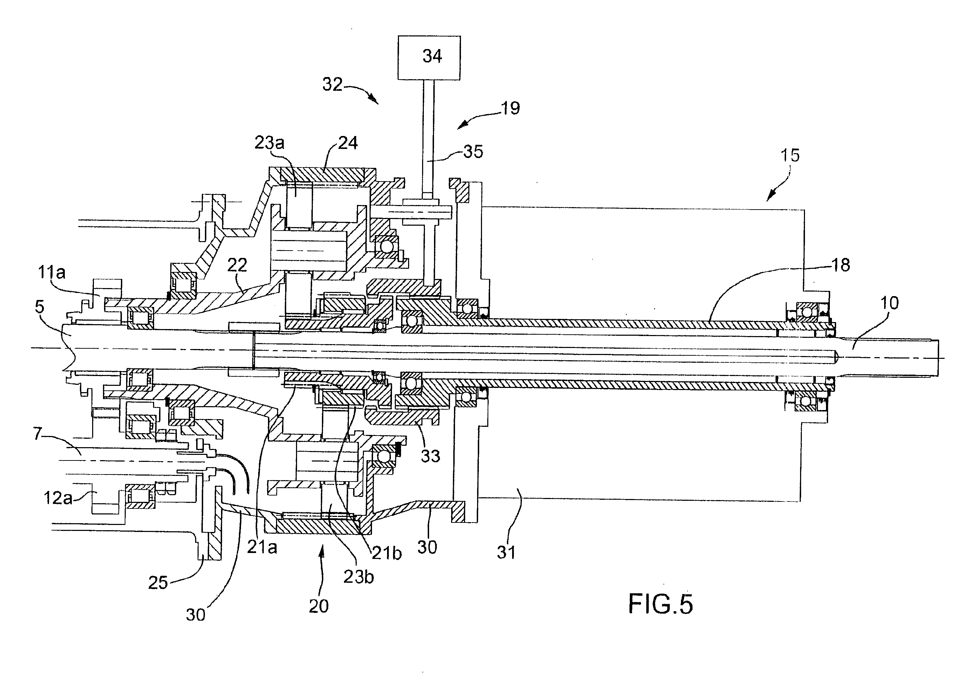

According to the variant shown in figure 5, the epicyclic gear train 20 includes a sun gear 21a engageable with the shaft 18 of the electric machine 15, a sun gear 21b engageable with the shaft 18 of the electric machine 15, a number of planet gears 23a which mesh with the sun gear 21a and with the external ring gear 24 defining a transmission ratio A and are carried by the planet gear carrier 23, and a number of planet gears 23b which mesh with the sun gear 21b and with the external ring gear 24 defining a transmission ratio B different from the transmission ratio A and are carried by the planet gear carrier 23.

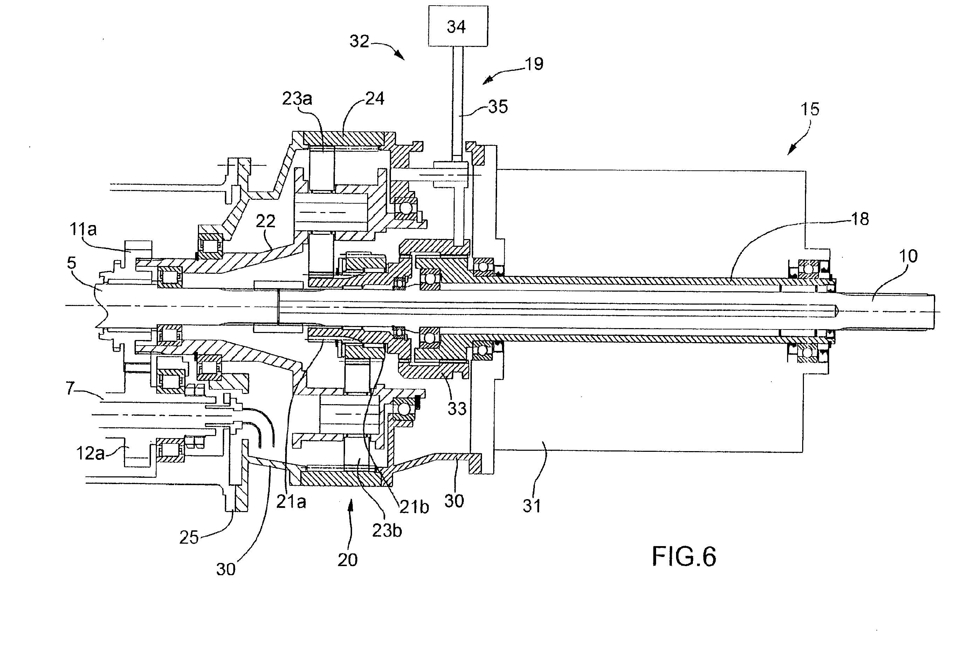

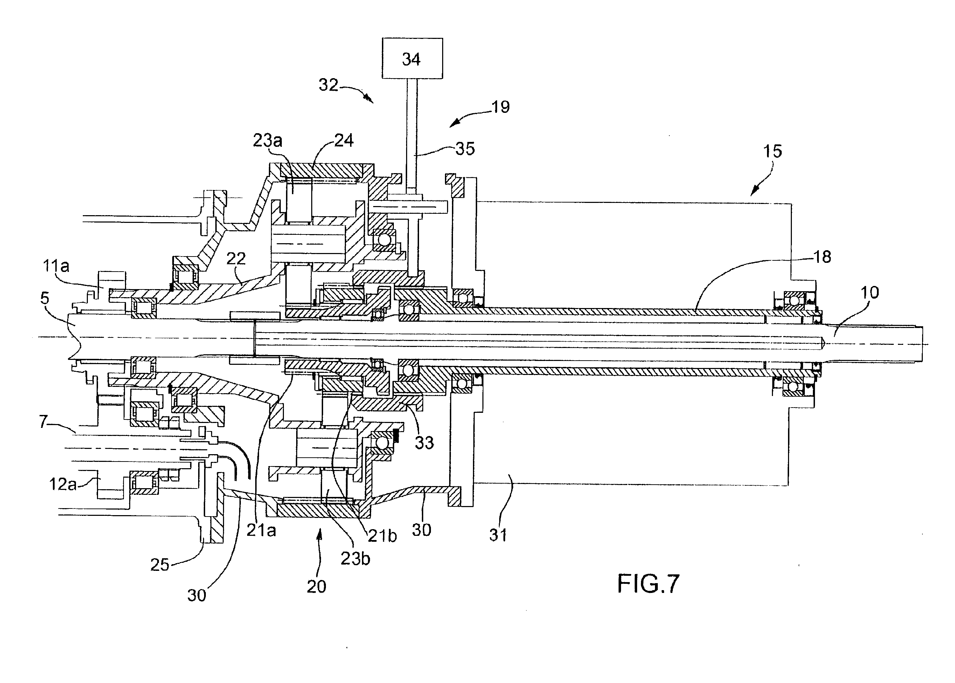

Furthermore, the connecting device 19 includes a coupling member 32, which is interposed between the shaft 18 of the electric machine 15 and the sun gears 21a and 21b and may be actuated to alternatively engage a sun gear 21a or 21b with the shaft 18 of the electric machine 15. The coupling member 32 includes a coupling gear 33 which is angularly integral with the shaft 18 of the electric machine 15 and is axially movable between a first engaging position (shown in figure 6), in which the coupling gear 33 meshes with the sun gear 21a, an intermediate disengaging position (shown in figure 5), in which the coupling gear 33 is angularly separated from both sun gears 21a and 21b, and a second engaging position (shown in figure 7), in which the coupling gear 33 meshes with the sun gear 21b. The position of the coupling gear 33 is controlled by a hydraulic actuator device 34, which is mechanically connected to a coupling gear 33 by means of a mechanical transmission 35.

It is worth noting that before displacing the coupling gear 33 from the intermediate disengaging position (shown in figures 6 and 7) to an engaging position (shown in figure 2), the electric machine 15 is run as a motor by absorbing electric energy from the battery 17 to make the coupling gear 33 reach a rotation speed nearly equal to the rotation speed of the sun gear 21a or 21b with which it must mesh; in this manner, the engagement of the coupling gear 27 with the sun gears 21a and 21b is fast, silent and free from relevant mechanical stresses.

The variant shown in figures 5-7 allows to couple the drive shaft 18 of the electric machine 15 to the primary gear 11a by means of two different transmission ratios A and B; in this manner, the field of use of the electric machine 15 may be extended by using the transmission ratio A when the low speeds (I, II and III) are engaged in the gearbox 4 and by using the transmission ratio B when the high speeds (IV, V and VI) are engaged in the gearbox 4.

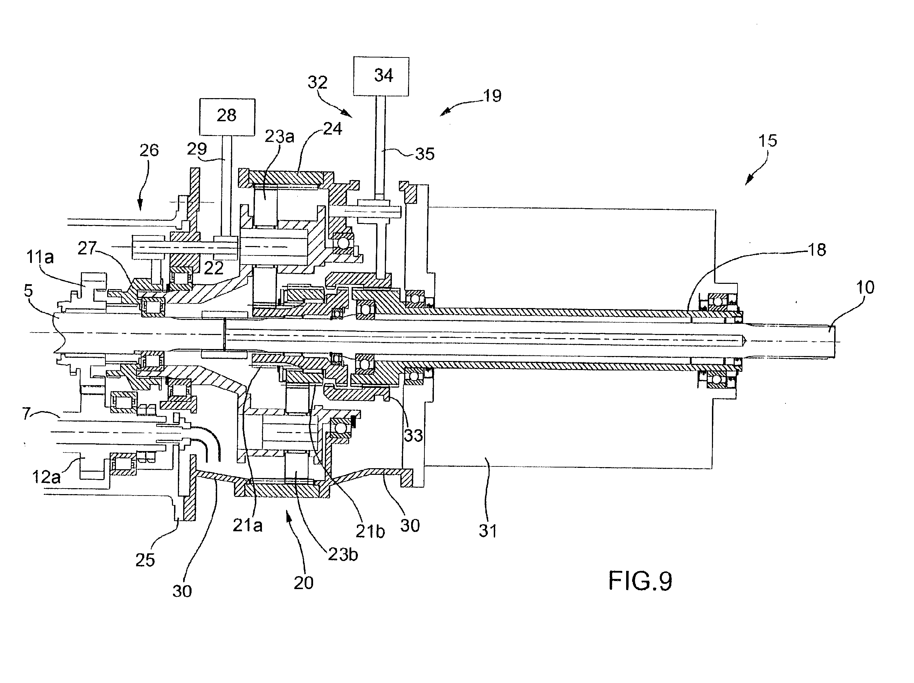

In the embodiment shown in figures 5-7, the coupling member 26 is not present and thus the planet gear carrier 23 is permanently connected to the primary gear; in this embodiment, the drive shaft 18 of the electric machine 15 is separated from the primary gear 11a by arranging the coupling gear 33 in the intermediate disengaging position (shown in figure 5). In the variant shown in figure 9, the coupling member 26 which is used to completely separate the epicyclic gear train 20 from the primary gear 11a is provided so as to prevent the idle rotation of the planet gear carrier 23.

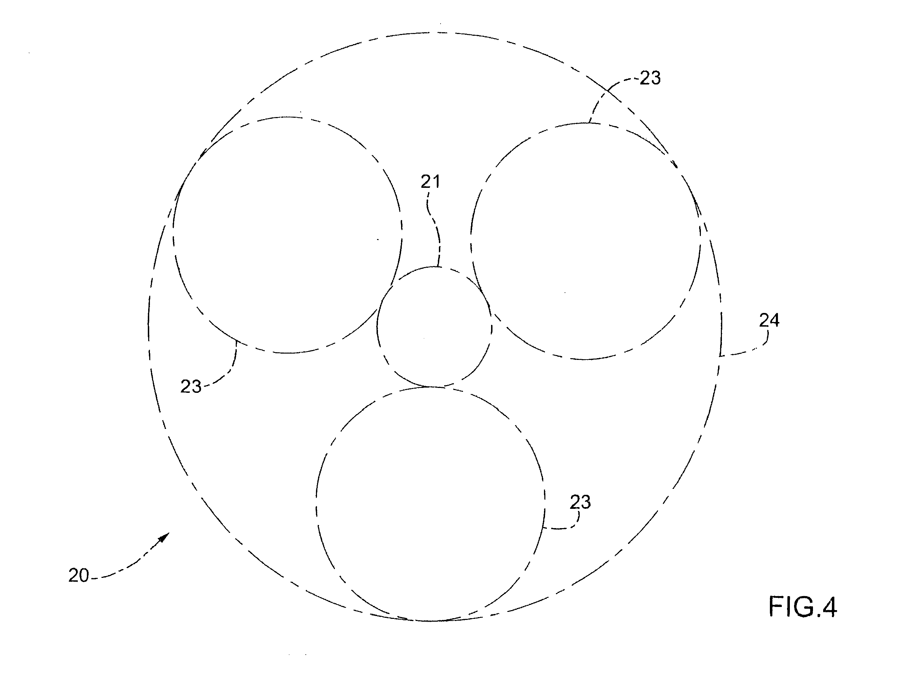

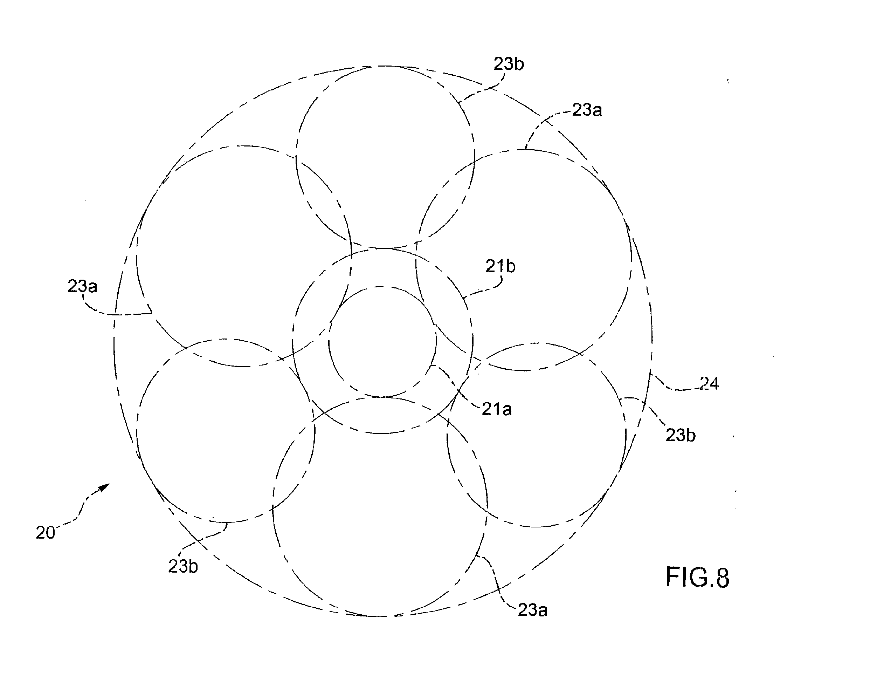

In the embodiments shown in figures 1-9, it is clearly seen that one outlet of the connecting device 19 consisting of the planet gear carrier 22 (possibly with the interposition of the coupling gear 27 of the coupling member 26) is frontally engaged with the primary gear 11a.

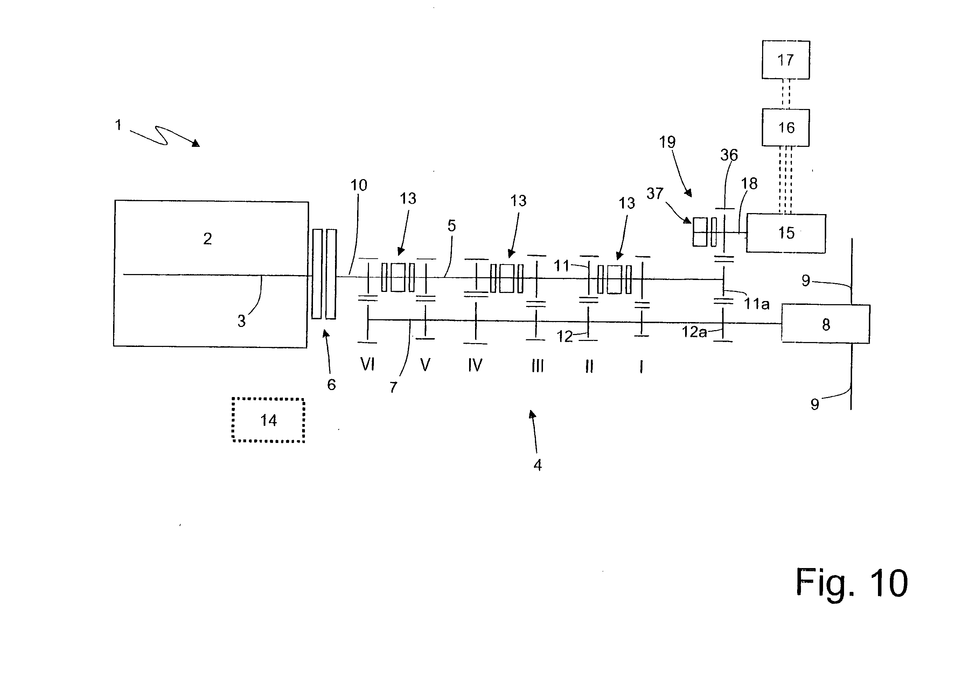

In the embodiment shown in figure 10, the coupling member 32 includes a connecting gear 36, which permanently meshes with the primary gear 11a, is coaxial to the shaft 18 of the electric machine 15 and is mechanically connectable to the shaft 18 of the electric machine 15. According to a preferred embodiment shown in figure 10, the connecting gear 36 is idly mounted to the shaft 18 of the electric machine 15 and the connecting device 19 includes a synchronizer 37 which is coaxially mounted to the shaft 18 of the electric machine 15 and is adapted to be actuated to engage the connecting gear 36 with the shaft 18 of the electric machine 15. According to a different embodiment, the connecting device 19 includes a clutch interposed between the shaft 18 of the electric machine 15 and the connecting gear 36.

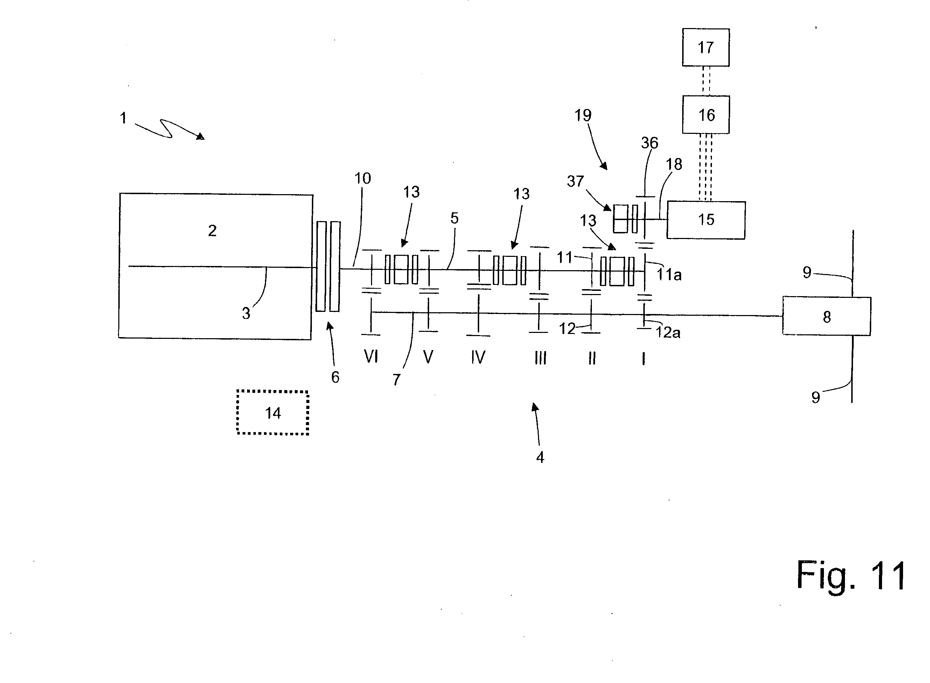

In the embodiment shown in figure 10, the pair of gears consisting of the primary gear 11a and the corresponding secondary gear 12a does not define a corresponding speed of the gearbox 4; in other words, the gears 11a and 12a are not normally present in the gearbox 4 and are added to the gearbox 4 for connecting the electric machine 15. In this embodiment, the primary gear 11a is idly mounted to the primary shaft 5 and is never engaged with the primary shaft 5. According to the embodiments shown in figures 1 and 11, the pair of gears consisting of the primary gear 11a mechanically connected to the electric machine 15 and of the corresponding secondary gear 12a defines a corresponding speed of the gearbox 4 (VI speed in the embodiment shown in figure 1 and I speed in the embodiment shown in figure 11); in other words, the gears 11a and 12a are normally present in the gearbox 4 and thus are not added to the gearbox 4 for connecting the electric machine 15. In this embodiment, the primary gear 11a is idly mounted to the primary shaft 5 and is associated to a corresponding synchronizer 13 to be engaged with the primary shaft 5 when the corresponding speed must be engaged.

From the above, it is apparent that the shaft 18 of the electric machine 15 is permanently connected to the secondary shaft 7 by means of the primary gear 11a, which always meshes with the corresponding secondary gear 12a, which in turn is always angularly integral with the secondary shaft 7. Furthermore, in some particular situations, the shaft 18 of the electric machine may be also be temporarily connected to the primary shaft 5 when the speed corresponding to the primary gear 11a is engaged.

Some possible uses of the electric machine 15 are described below.

In case of deceleration of the car, the reversible electric machine 15 may work as a generator, supplying electric energy to the battery 17 to perform a regenerative braking (compatibly with the charge state of the battery 17 and with the dynamics of the car) in order to partially recover the kinetic energy owned by the car ("regenerative braking").

In the case of fast acceleration, the reversible electric machine 15 may work as an electric motor, by absorbing electric energy from the battery 17 to supply an additional drive torque ("electric boost").

In specific situations and for limited intervals of time, the electric machine 15 may work as a motor by absorbing electric energy from the battery 17 while the internal combustion engine 2 is off and the servo-assisted clutch 6 is open; in this situation, traction is merely electric ("full electric driving").

When travelling at a very slow speed, the reversible electric machine 15 may work as a motor by absorbing electric energy from the battery 17 in a "crawling" mode (low speed feeding) to avoid an excessive wear of the servo-assisted clutch 6. In other words, to simulate the behaviour of a traditional automatic transmission, when the foot is released from the brake pedal, the car is advanced at a very slow speed by using only the drive torque generated by the electric machine 15, which is run as a motor by absorbing electric energy from the battery 17; in this manner, it is not needed to use the servo-assisted clutch 6 for transmitting the drive torque generated by the thermal combustion engine 2 and a high wear of the servo-assisted clutch 6 itself is thus avoided.

In the case of stopping the car 1 on a slope, the reversible electric machine 15 may work as an electromagnetic brake to hold the car braked by statically generating (i.e. without rotating) a drive torque which balances the torque generated by the slope ("hill hold").

During the step of picking up (standing start), the electric machine 15 may work as a motor by absorbing electric energy from the battery 17 to generate a drive torque which is added to the drive torque generated by the internal combustion engine 2 (which must therefore generate less drive torque) to avoid the clutch 6 from overheating ("boosted pick-up"). In other words, during the step of picking up, the combustion engine 2 must generate less drive torque because a drive torque contribution provided by the electric machine 15 is also present; in this manner, the clutch 6 during the step of closing must transmit less drive torque and thus wears (overheats) less.

When the combustion engine 2 is cold, i.e. during the warming up of the combustion engine 2, the combustion engine 2 itself is run at an optimal, essentially constant speed to optimize heating, e.g. minimising the polluting emissions during the engine warm-up; the oscillations of the drive torque are compensated by the electric machine 15 which may work either as a motor (when the drive torque generated by the combustion engine 2 is insufficient) or as a generator (when the drive torque generated by the combustion engine 2 is excessive).

The servo-assisted gearbox 4 is free from the reverse gear (as apparent in figures 1, 10 and 11) and the reverse motion is performed by using only the electric machine 15 which is run as a motor by absorbing electric energy from the battery 17 ("R-gear removal").

During a speed shift, the reversible electric machine 15 may be used to close the torque gap at the drive wheels, which occurs during the speed shift upon opening the servo-assisted clutch 6. In this case, the electric machine 15 is driven so as to replace the internal combustion engine 2 when the servo-assisted clutch remains open. Therefore, the reversible electric machine 15 may work as an electric motor by absorbing electric energy from the battery 17 to generate a drive torque equivalent to the drive torque generated by the internal combustion engine 2 (car accelerating with the internal combustion engine 2 driving - shifting up), or may work as an electric generator to apply to the secondary shaft 7 a braking torque equivalent to the exhaust brake of the internal combustion engine 2 (car decelerating with the internal combustion engine 2 not driving - shifting down). It is important to underline that when the servo-assisted clutch 6 is open, the reversible electric machine 15 is required to generate/absorb a mechanical torque which depends on the desired law of motion of the car, which desired law of motion normally includes the absence of relevant discontinuity in accelerations/decelerations.

Closing the torque gap during a speed shift from an old gear to a new gear provides for:
determining the acceleration of the vehicle with the old speed engaged;
determining the drive torque of the vehicle with the old speed engaged according to the acceleration of the vehicle with the old gear engaged;
determining the drive torque of the vehicle with the new speed engaged according to the drive torque of the vehicle with the old speed engaged and according to the variation of the transmission ratio between the old speed and the new speed;
generating a drive torque target which includes a drive torque equal to the drive torque of the vehicle with the old speed engaged in the opening moment of the servo-assisted clutch 6, and a drive torque equal to the drive torque of the vehicle with the new speed engaged in the closing moment of the servo-assisted clutch 6; and
driving the electric machine 15 as a motor to follow the drive torque target between the opening moment of the servo-assisted clutch 6 and the closing moment of the servo-assisted clutch 6.

Obviously, the drive torque target is calculated so as not to display any discontinuity and thus smoothly link the drive torque of the vehicle with the old speed engaged to the drive torque of the vehicle with the new speed engaged.

An estimated value of the vehicle weight is used to determine the drive torque of the vehicle according to the vehicle acceleration. Such an estimated value of the vehicle weight is constantly updated by means of self-learning strategies which in certain moments compare the real acceleration/deceleration of the vehicle with the expected acceleration/deceleration of the vehicle (determined by using the estimated value of the vehicle weight); in case of significant differences between the real acceleration/deceleration of the vehicle and the expected acceleration/deceleration of the vehicle, such differences are attributed to a variation of the vehicle weight and are then used to update the estimated value of the vehicle weight (obviously making sure that such differences are not due to changes of road slope). The updating of the estimated value of the vehicle weight could be performed also by using the data regarding the amount of fuel present in the tank, the data about the presence of a front seat passenger (normally available because these data are used by the front passenger airbag control) and possibly the data provided by the suspension sensors when the vehicle is standing.

As previously mentioned, the connecting device 19 is also adapted to keep the shaft 18 of the reversible electric machine 15 idle (i.e. connected neither to the primary shaft 5, nor to the secondary shaft 7); such a configuration is used when the reversible electric machine 15 needs to be used neither as a motor, nor as a generator (e.g. car travelling at a constant speed on a motorway and battery 17 completely charged) and it is desirable to avoid feeding the shaft 18 of the reversible electric machine 15 (the idle rotation of the shaft 18 of the reversible electric machine 15 implies losses of mechanical energy due to friction and ventilation). Furthermore, the shaft 18 of the reversible electric machine 15 is necessarily kept idle (i.e. is not connected to the primary gear 11a) when the rotation speeds of the secondary shaft 7 are not compatible with the maximum rotation speed of the shaft 18 of the reversible electric machine 15; in this manner, the mechanical dimensioning of the reversible electric machine 15 is simplified because the electric machine 15 does not necessarily need to work (or at least does not need to work for long periods of time) at all the possible rotation speeds of the secondary shaft 7.

The above-described servo-assisted transmission 1 displays many advantages, because it is structurally very similar to a standard servo-assisted transmission and thus simple and cost-effective to be implemented starting from an existing servo-assisted transmission 1. Furthermore, in the above-described servo-assisted transmission 1, the positioning of the electric machine 15 is relatively convenient also in an existing vehicle which is not designed for hybrid traction. Specifically, the embodiment shown in figures 1-9 is particularly adapted to a vehicle with a transaxle-type transmission, i.e. with the internal combustion engine 2 longitudinally arranged in a front position and the gearbox 4 longitudinally arranged in a rear position; indeed, in a vehicle with a transaxle-type transmission, the electric machine 15 is positioned in the central tunnel of the vehicle with a particularly simple layout and either minimum or no changes to the vehicle body.

## Claims

1. An automotive transmission (1) including:
a mechanical gearbox (4), which is provided with a primary shaft (5) connectable to a drive shaft (3) of an internal combustion engine (2), with a secondary shaft (7) connected to drive wheels, and with a plurality of gear pairs, each of which includes a primary gear (11) mounted to the primary shaft (5) and a secondary gear (12) which is mounted to the secondary shaft (7) and permanently meshes with the primary shaft (11);
a clutch (6) for connecting the primary shaft (5) of the servo-assisted gearbox (4) to a drive shaft (3) of the internal combustion engine (2); and
an electric machine (15) provided with a shaft (18) thereof;
the servo-assisted transmission (1) is **characterized in that** the shaft (18) of the electric machine (15) is mechanically connected to a first primary gear (11a) which permanently meshes with a corresponding first secondary gear (12a).

2. A servo-assisted transmission (1) according to claim 1, wherein the first primary gear (11a) is idly mounted to the primary shaft (5), and the first secondary gear (12a) is angularly integral with the secondary shaft (7).

3. A servo-assisted transmission (1) according to claim 2, wherein the gear pair consisting of the first primary gear (11a) mechanically connected to the electric machine (15) and of the corresponding first secondary gear (12a) defines a corresponding speed of the gearbox (4); the first primary gear (11a) is idly mounted to the primary shaft (5) and is associated to a corresponding synchronizer (13) to be engaged with the primary shaft (5).

4. A servo-assisted transmission (1) according to claim 2, wherein the gear pair consisting of the first primary gear (11a) mechanically connected to the electric machine (15) and of the corresponding first secondary gear (12a) does not define a corresponding speed of the gearbox (4); the first primary gear (11a) is idly mounted to the primary shaft (5) and is never engaged with the primary shaft (5).

5. A servo-assisted transmission (1) according to anyone of the claims from 1 to 4 and including a connecting device (19) which is interposed between the shaft (18) of the electric machine (15) and the first primary gear (11a) and is adapted to mechanically connect and disconnect the shaft (18) of the electric machine (15) to and from the first primary gear (11a).

6. A servo-assisted transmission (1) according to claim 5, wherein the first primary gear (11a) is arranged at one end of the primary shaft (5).

7. A servo-assisted transmission (1) according to claim 6 and including a transmission shaft (10), which is interposed between an outlet of the clutch (6) and the primary shaft (5); the electric machine (15) and the connecting device (19) are coaxially arranged about the transmission shaft (10) and are centrally hollow to accommodate the transmission shaft (10) therein.

8. A servo-assisted transmission (1) according to claim 7, wherein an outlet of the connecting device (19) frontally engages with the first primary gear (11a).

9. A servo-assisted transmission (1) according to claim 8, wherein the connecting device (19) includes an epicyclic gear train (20) including:
a sun gear (21) integral with the shaft (18) of the electric machine (15);
a planet gear carrier (23) which is coaxial to and facing the first primary gear (11a) and transmits the motion to the first primary gear (11a) itself;
a number of planet gears (23) which mesh with the sun gear (21) and are carried by the planet gear carrier (23); and
an external ring gear (24) which meshes with the planet gears (23).

10. A servo-assisted transmission (1) according to claim 8, wherein the connecting device (19) includes an epicyclic gear train (20) including:
a first sun gear (21) engageable with the shaft (18) of the electric machine (15);
a second sun gear (21) engageable with the shaft (18) of the electric machine (15);
a planet gear carrier (23) which is coaxial to and facing the first primary gear (11a) and transmits the motion to the first primary gear (11a) itself;
a number of first planet gears (23a) which mesh with the first sun gear (21a) defining a first transmission ratio (A) and are carried by the planet gear carrier (23);
a number of second planet gears (23b) which mesh with the second sun gear (21b) defining a second transmission ratio (B) different from the first transmission ratio (A) and are carried by the planet gear carrier (23);
an external ring gear (24) which meshes with the first planet gears (23a) and with the second planet gears (23b); and
a first coupling member (32), which is interposed between the shaft (18) of the electric machine (15) and the sun gears (21a, 21b) and may be actuated to alternatively engage a sun gear (21) with the shaft (18) of the electric machine (15).

11. A servo-assisted (1) transmission according to claim 10, wherein the first coupling member (32) includes a first coupling gear (33) which is angularly integral with the shaft (18) of the electric machine (15) and is axially movable between a first engaging position, in which the first coupling gear (33) meshes with the first sun gear (21a), in an intermediate disengaging position, in which the first coupling gear (33) is angularly separated from both sun gears (21a, 21b), and a second engaging position, in which the first coupling gear (33) meshes with the second sun gear (21b).

12. A servo-assisted transmission (1) according to claim 11, wherein the planet gear carrier (23) is permanently connected to the first primary gear (11a).

13. A servo-assisted transmission (1) according to anyone of the claims from 9 to 11, wherein:
the planet gear carrier (23) is permanently connected to the first primary gear (11a);
the external ring gear (24) is rotationally mounted; and
the connecting device (19) includes a brake which is coupled to the external ring gear (24) and may be actuated to block the rotation of the external ring gear (24).

14. A servo-assisted transmission (1) according to anyone of the claims from 9 to 11, wherein the connecting device (19) includes a second coupling member (26), which is interposed between the planet gear carrier (23) and the first primary gear (11a), and may be actuated to mechanically engage the planet gear carrier (23) with the first primary gear (11a).

15. A servo-assisted transmission (1) according to claim 14, wherein the second coupling member (26) includes a second coupling gear (27) which is angularly integral with the planet gear carrier (23) and is axially movable between a disengaging position, in which the second coupling gear (27) is separated from the first primary gear (11a), and an engaging position, in which the second coupling gear (27) is frontally engaged with the first primary gear (11a).

16. A servo-assisted transmission (1) according to claim 5, wherein the connecting device (19) includes a connecting gear (36), which permanently meshes with the first primary gear (11a), is coaxial to the shaft (18) of the electric machine (15) and may be mechanically connected to the shaft (18) of the electric machine (15).

17. A servo-assisted transmission (1) according to claim 16, wherein the connecting device (19) includes a clutch interposed between the shaft (17) of the electric machine (15) and the connecting gear (36).

18. A servo-assisted transmission (1) according to claim 16, wherein the connecting gear (36) is idly mounted to the shaft (18) of the electric machine (15); the connecting device (19) includes a synchronizer (37) which is coaxially mounted to the shaft (18) of the electric machine (15) and is adapted to be actuated to engage the connecting gear (36) with the shaft (18) of the electric machine (15).
